# EUROPEAN PATENT SPECIFICATION

(11) **EP 2 275 947 B1**
(45) Date of publication and mention of the grant of the patent: **29.05.2013**
(21) Application number: 10184313.4
(22) Date of filing: 09.12.2002
(51) Int. Cl.: G06F 15/16, G06F 9/46, H04L 12/46, H04L 29/08, H04L 29/06

(54) **Apparatus and method for optimized and secured reflection of network services to remote locations**
VORRICHTUNG UND VERFAHREN FÜR OPTIMIERTE UND GESICHERTE REFLEXION VON NETZWERKDIENSTEN ZU ABGESETZTEN STANDORTEN
APPAREIL ET PROCEDE DE REFLEXION OPTIMISEE ET SECURISEE DE SERVICES DE RESEAU VERS DES EMPLACEMENTS A DISTANCE

(30) Priority: 10.12.2001 US 337795 P
(43) Date of publication of application: 19.01.2011
(62) Divisional of application: 02793297.9
(73) Proprietor: SAP Portals Israel Ltd., 43665 Ra'anana (IL)
(72) Inventor: Helfman, Nadav Binyamin, 30500, Binyamina (IL)
(74) Representative: Müller-Boré & Partner Patentanwälte

(56) References cited:
- EP-A- 1 024 429
- WO-A-97/27546
- WO-A-98/51035
- WO-A2-01/82023
- US-A- 5 874 907

## Description

### Priority is claimed from U. S. Provisional Patent Application, for OPTIMIZED AND SECURED REFLECTION OF NETWORK SERVICES TO REMOTE LOCATIONS filed on I ooth of December 2001.

### BACKGROUND OF THE INVENTION

### FIELD OF THE INVENTION

The present invention relates generally to data communication networks. More particularly, the present invention relates to the provision of network architecture and an associated methodology for providing, managing, securing and optimizing networked base services to remote and/or physically isolated sites.

### DISCUSSION OF THE RELATED ART

In recent years organizations are becoming increasingly distributed having a substantially large numbers of remote offices and a multitude of telecommuting home workers. Consequent to the major advances in the data communications field, this trend is expected to continue and even accelerate. This trend is also as a result of business awareness to be located closer to the market.

According to the conclusions of current researches there are about three million remote offices in the U. S. business market today, and within a short number of years this number is expected to grow to about five million.

In order to provide to the multitude of remote offices/workers operative access to centralized computerized resources of an organization advanced and enhanced Interactive Remote Access techniques are needed.

Interactive Remote Access (IRA) -is defined as the provisioning of quality IT infrastructure by a set of Service Producer hosts to a set of remote Service Consumers where the remote Service Consumers are users located physically remote from the central organization facilities. The proper performance and management of the IRA is one of the earliest and most fundamental problems of information technology. The major problematic aspects of IRA are : deployment, management, performance, and security. Currently, various solution categories exist where each category addresses only a specific subset of the above- mentioned aspects.

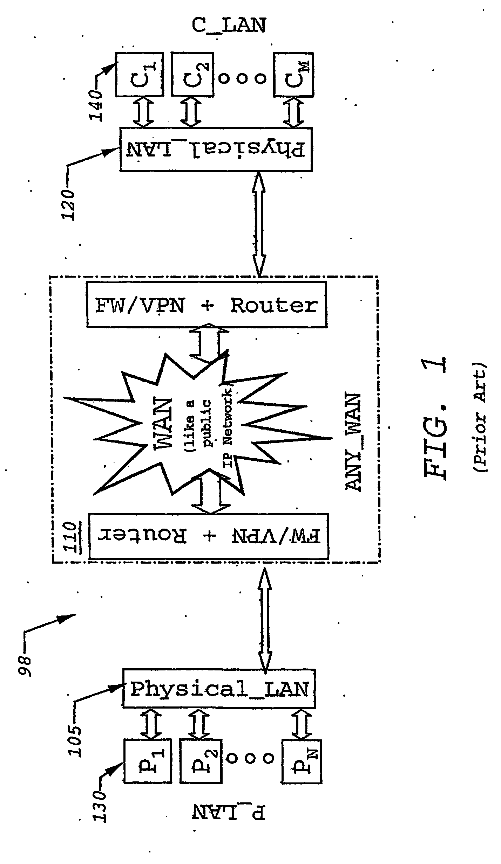

A) Wide Area Network (WAN) technologies, such as Frame Relay, dial-up, or Internet Protocol Virtual Private Networks (IP VPN) are one set of techniques that typically support IRA. Fig. 1 illustrates a WAN infrastructure that is used for direct network layer communication between a Consumer and a central Producer. The illustrated WAN could be further utilized as medium of synchronization where replication of infrastructure is implemented. As the drawing shows, a set of central producers 130 are connected to a WAN 110 (including appropriate (Fire Walls/Virtual Private Networks (FW/VPN) and router devices via a shared physical Local Area Network (LAN) 105. Persons skilled in the art will appreciate that the connection through a WAN could be implemented without firewall devices or VPNs. Similarly, a set of Customers 140 is connected to the WAN 110 via a shared physical LAN 120. The drawbacks of the WAN technologies concern a disparity of-2 scales in actual end-to-end bandwidth between the LAN and the WAN, despite the continuous technological capabilities improvement, and the fact that direct communication between networks has the potential of exposing resources to unauthorized access via the exploitation of flaws in the traffic control policy, such as implemented by a firewall device. WAN technology may benefit from the following sub-categories: a) Security in shared medium networks is an enabling technology since WAN communication is often performed on a shared communication medium, such as the Internet. The Internet is a public network and therefore the internal network resources could be exposed to unauthorized access on the shared medium. Consequently, the transmitted information could be exposed to unauthorized eyes, could be maliciously tampered with, or could be spoofed. It is evident that in quality IT the above-mentioned security violations are intolerable.

Thus, advanced security solutions, such as access control can include firewall technology, encryption, and efficient authentication (VPN), became enabling technologies. b) Communication accelerators benefit the performance of WAN. This class of products deals principally with the acceleration of traffic. Communication accelerator products are usually designed exclusively for specific WAN technologies, such as Frame Relay or satellite. These products are focused on the communication channel not in the overall service provisioning process. c) Bandwidth management is typically required since the WAN capacity is a substantially limited resource. A bandwidth management system allocates bandwidth according to the objectives of the organization. Typically, packets of multimedia or interactive applications receive priority over packets of batch transactions, in order to provide better response time to the users.

B) Replication of tnfrastmeture/Distributed infrastructure technologies replicate a specific central resource and situate the replicated resource close to the remote consumer. Replication is the process of making duplicate copies of enterprise data for content distribution and other business needs. The replication methods vary from a simple"night scheduled File Transfer Protocol (FTP) "to a real time synchronization of distributed servers. The main drawback of this approach is that the solutions are implemented separately for each application where each separate implementation involves considerable financial investment in hardware/software and requires considerable management and maintenance.

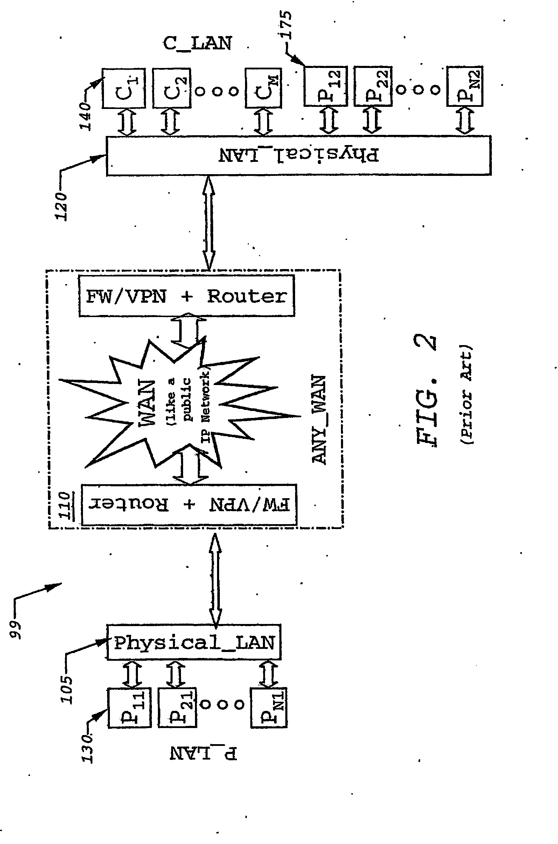

Fig. 2 depicts a distributed infrastructure 99 where a set of central producers 130 is linked to a WAN 110 via a remote physical LAN 105. The drawing further shows a set of Customers 140 and a set of replicated Producers 175 that are linked to the WAN 110 via a local physical LAN 120. The Producers 175 are the replicas of the central producers 130. Since the local physical LAN 120 is shared both by the local Customers 140 and the Producers 175 are mirroring the central producers 130, the local Customers 140 are provided with the option of quick efficient access to the resources provided by the central producers 130 by locally connecting to the replicated Producers 175 within the LAN 120 architecture.

Thus, the requirement of communicating to the central producers 130 via the WAN 110 in order to access the desired resources is substantially negated.

C) Terminal Servers technologies are workaround approaches for IRA where the actual processing is performed in the organization's central facilities by the utilization of application servers. Typically, dumb Graphical User Interfaces (GUIs) are used to operate the application over the WAN. The terminal server approach reduces the need for maintaining infrastructure in remote locations. The disadvantages of this approach concern the fact that the end users do not utilize fully a dedicated powerful workstation but share the processing power of a few machines with the entire set of users. Processing power sharing results in a potentially inefficient processing. Another disadvantage concerns the fact that the operation of the GUI is performed over the WAN and thus becomes substantially sensitive to delays and distortions.

D) Caching/Content delivery technologies are replicated infrastructure technologies that are specific for the World Wide Web (Web) and for other "Stateless Producer"communication environments. In"Stateless Producer" communications, the original Producer is not concerned by the consumption of a resource, and therefore repeated requests for the same resource could be cached in a specific Proxy server that is situated closer to the Consumer. The resource could also be delivered to the Proxy servers prior to any Consumer request. The limitation of Caching/Content delivery technology is that it does not fit the "Stateful Producer"case where the Producer is concerned by the availability of resources and therefore may modify its internal state to indicate that a specific transaction took place. The"Stateful Producer"case requires that the transaction be to be performed between the original Consumer and Producer.

It would be readily understood by one with ordinary skills in the art that the existing solutions do not provide for a comprehensive approach. Thus, an improved mechanism is needed that is used for all the aspects of IRA, such as management, security, acceleration, improved bandwidth management, and monitoring.

### SUMMARY OF THE PRESENT INVENTION

A first aspect of the present invention regards a method is provided for secure and efficient provisioning of network services in remote locations.

Considering a network (Producer LAN) with hosts that provide services, and a remote network (Consumer LAN) with hosts that need to consume the services. A device (Producer Reflector), which is attached to Consumer LAN, is used to create virtual local instance of the Service Producers with which users on Consumer LAN communicate directly. A second device Consumer Reflector, which is physically attached to Producer LAN, creates virtual local network images of hosts from Consumer LAN. These images communicate with the original service Producers on behalf of the remote hosts. Both the service Producers and the service consumer hosts are not aware that they communicate with virtual images, and not actual local hosts. Using this architecture there is no direct network layer (such as OSI model layer 3) communication between the actual Producer and the actual Consumer hosts. The communication is enabled according to a reflection policy. This policy is assigned by an offline manager, and interpreted by both the Consumer Reflector and the Producer Reflector devices. The physical network isolation provides high level of security by protecting resources in both Producer LAN and Consumer LAN from hackers on the other network. In another aspect of the invention an adaptive hyper context compression mechanism is used to identify redundancy in historical session and utilize it in present sessions, achieving superior performances. For this purpose a hyper-context data structure is used to manage"Redundancy items". In another aspect of the invention a message oriented service level management process is used. This process attaches a Target End Time (TET) to each massage, and use a priority queue to implement an Earliest Deadline First (EDF) scheduling policy.

A second aspect of the present invention regards a in a data communication network including a remote service producer, a local service consumer, a system for providing network services from the remote service producer to the local service consumer, the system comprising the elements of a remote service producer linked to an at least one remote network; a local service customer linked to a local network; a service producer reflector device linked to the local network and connected to a reflector device via a network channel over a data communication network; a service consumer reflector device linked to the remote network and connected to the service producer reflector device via a network channel over the data communications network; a network instance image of the remote service producer associated with the local network; a network instance image of the local service consumer associated with the remote network. The remote service producer provides network-based services to the local service consumer. The service-provision-specific resources provided by the service producer is linked to the remote network are reflected from the remote network via the data communication network to the local network where the reflection of the service-provision-specific resources is accomplished from the remote service provider to the local network instance image. The service- reception-specific resources provided by the service consumer linked to the local network are reflected from the local network via the data communication network to the remote network where the reflection of the service-reception-specific resources is accomplished by the physical replication of the resources from the local service consumer to the remote network instance image. The system may further comprise the following elements: a reflection policy control table to implement a pre-defined reflection policy; an information redundancy detector and information redundancy eliminator mechanism to eliminate redundant traffic; a compression and un-compression mechanism; a service level management mechanism; a current and statistical timing analysis mechanism. It system may also comprise the following elements: a pre-compressor module on the transmitting side; a recorder module on the transmitting side; a real-time context buffer on the transmitting side; an analyzer module on the transmitting side; a logic manager on the transmitting side; a post-compressor module on the receiving side; a real-time context module on the receiving side; an analyzer module on the receiving side; a logic module on the receiving side and a logic manager on the receiving side. The reflection policy control table comprises the elements of : a service producer host address; a service producer communication protocol type; a definition of the sites to which the service is reflected. The information redundancy detector and information redundancy eliminator comprises a hyper-context data structure. The hyper-context data structure is a collection of composite session context objects and grouped recursive context objects. The context objects comprise a collection of redundancy items. A redundancy item comprises the elements of : a redundancy item content definition; a redundancy item length; a redundancy item hash value; and a collection of time counters with decreasing time resolution. The hyper-context data structure can comprise the elements of : a current session context object; a session type context object; a consumer context object; a producer context object; a consumer group context object; a producer group context object; and a protocol context object.

The compression mechanism may comprise the elements a compressor device; a decompressor device; and a common acceleration resources database. The service level management mechanism may comprise the elements of : a priority queue for message scheduling; a batch manager; a message dispatcher; a connections multiplexer; a connections demultiplexer ; a priority load manager; and a timing indicator associated with a specific message.

A third aspect of the invention regards in a data communication network including remote service producer and a local service consumer, a method for providing network services from the remote service producer to the local service consumer, the method comprising the steps of : establishing a session between a service producer and a service consumer where the establishment of the session comprising the steps of : loading the relevant context objects by both sides; validating the loaded context objects by both sides; acknowledging that the loaded the context objects are identical; encoding the messages sent by the message transmitter, The encoding process comprising the steps of : performing pattern matching between the message and the hyper-context data structure; storing the redundancy items in the session context object; signaling the receiver side; transmitting a encoded content to the receiving side; decoding the messages received by the message receiver, the decoding process comprising the steps of : extracting the received encoded content via the utilization of the hyper-context structure; processing the messages, the processing comprising the steps of : updating the appearance counters; recording selectively the content of the channel. The method further comprises the step of terminating the session, the session termination comprising the steps of : freeing the current session context object and freeing the recorded content. The method further comprises the step of off-line learning, the off-line learning process comprising the steps of : transferring the redundancy items from the current session object to hyper-context structure; performing a search on the selected-recorded segments; updating or creating the proper redundancy items; updating the timing counters; and determining the location of the redundancy items in the hyper-context structure.

The hyper-context process is accomplished through searching a context object using the same process that searches the entire hyper-context data structure. The hyper-context process is accomplished through matching with redundancy items within the hyper-context data structure. The hyper-context processing is accomplished through generating a collection of data-blocks where each block contains a chained content of redundancy Items. The direct single block processing comprises searching the current session context object by using the same process that searches the entire hyper-context data structure. The searching a context object comprises the steps of : matching the content of the channel with elements from the real time context by the pre-compressor unit; replacing the matched elements with tokens according to a pre-defined coding scheme; compressing the data stream; uncompressing the data stream; extracting the original content from the tokens; selectively recording the content; analyzing the recordings; and updating the common acceleration resources database. The hyper- context data structure is used to generate a collection of data blocks where each block contains a chained content of redundancy items and a block injection policy. The method further comprises service level management. The management of the service level is performed in a batch mode. The management of the service level is performed in an interactive mode. The service level management in the interactive mode comprises the steps of : storing the messages in a priority queue managed by a timing value on the transmitting side; collecting segments from the transmitted content at a rate determined by a timing value and by the presence of the previous segments in the priority queue on the transmitting side ; attaching each sample a timing value in order to ensure minimal keep-alive rate on the transmitting side ; dispatching the messages to the connections multiplexer; multiplexing the messages ; de-multiplexing the messages on the receiver side; and processing the messages in accordance with the timing value. The method further comprises the steps of: measuring the processing time of the messages; determining the processor load on the service producer by the load manager; and performing load balancing in accordance with the processor load.

A fourth aspect of the present invention regards a method for providing network services in remote location using virtual local instances of the remote service producers in the local area network, in which the service consumers are presented according to a reflection policy, with a defined service level for each service, which utilizes the following mechanism detection and internal transmitting of message; elimination of redundant traffic using a hyper- context compression technique; and providing service level management of both interactive and batch transactions. The hyper-context data structure is a composite session context objects and a grouped recursive context objects when each context object is a collection of redundancy items, which comprises time counters with decreasing time resolution.

A fifth aspect of the present invention regards an apparatus for compression, the apparatus comprising a pre-compressor unit preceding a regular compressor unit, the pre-compressor unit matches the content of the messages to be compressed with previous content, which is selectively loaded to a memory device from a database of common acceleration resources, which is generated both at the receiver and the transmitter sides from recorded data; and a post- decompressor unit is used at the receiver side subsequent the decompressor unit for constructing the original message.

### BRIEF DESCRIPTION OF THE DRAWINGS

The present invention will be understood and appreciated more fully from the following detailed description taken in conjunction with the drawings in which:
Fig. 1 is a functional block diagram that illustrates direct WAN communication between Service Producers and Service Consumers associated with a remote location, as known in the art;
Fig. 2 is a functional block diagram that illustrates typical distributed infrastructure architecture, as known in the art;
Fig. 3 is a functional block diagram that illustrates the reflection of Service Producers and Service Consumers to a remote location via a virtual local instance of each host, in accordance with a preferred embodiment of the present invention;
Figs. 4 is a functional block diagram that illustrates a typical deployment of the reflectors within a distributed organization having branch offices and remote and/or mobile workers, in accordance with a preferred embodiment of the present invention;
Fig. 5 illustrates an exemplary reflection policy via a control table that maps an original Service Producer to a list of remote sites or a group of sites, in accordance with a preferred embodiment of the present invention;
Fig. 6 is a functional block diagram that illustrates the processing of a continuous connection between a Service Producer and a Service Consumer, in accordance with a preferred embodiment of the present invention;
Fig. 7 is a functional block diagram that illustrates the transmission and reception activities at the system level, in accordance with a preferred embodiment of the invention;
Fig. 8 illustrates an exemplary" Redundancy item"data structure, in accordance with a preferred embodiment of the invention;
Fig. 9 is a software objects inter-relation diagram that illustrates the hyper-context data structure, which is a part of the adaptive high-resolution discovery and elimination of information redundancy mechanism, in accordance with a preferred embodiment of the invention;
Fig. 10 is an exemplary token coding scheme that could address items of the context object of

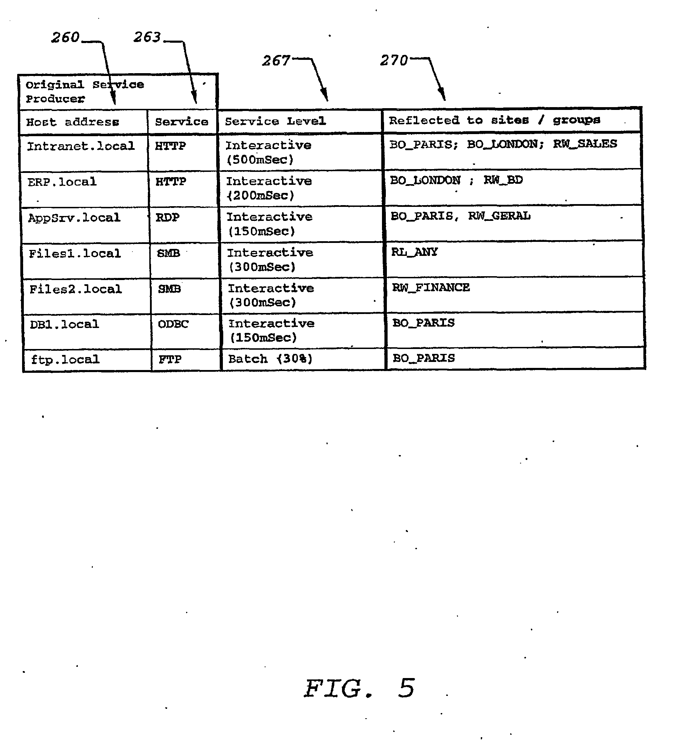

Fig. 5, in accordance with a preferred embodiment of the invention;

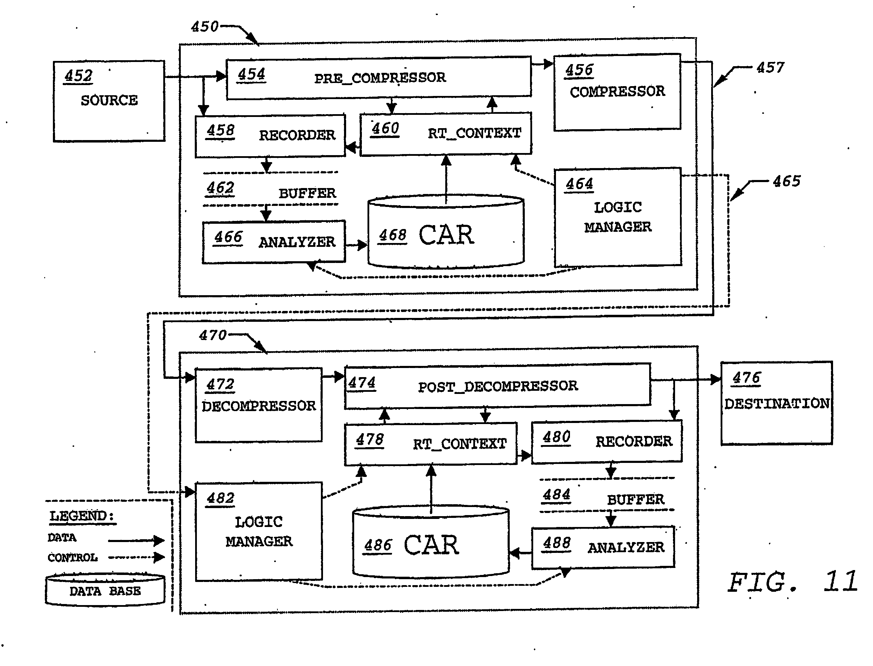

Fig. 11 is a functional block diagram that illustrates the communication between an information source and an information destination over a channel using an adaptive high-resolution discovery, and elimination of information redundancy mechanism, in accordance with a preferred embodiment of the invention;

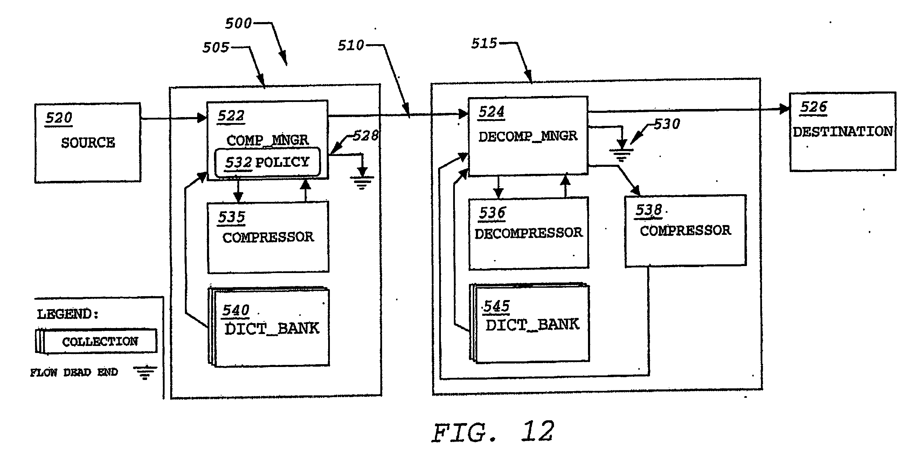

Fig. 12 is a functional block diagram that illustrates a mechanism for communication between an information source and an information destination over channel using policy based dictionary injection, in accordance with a preferred embodiment of the invention;

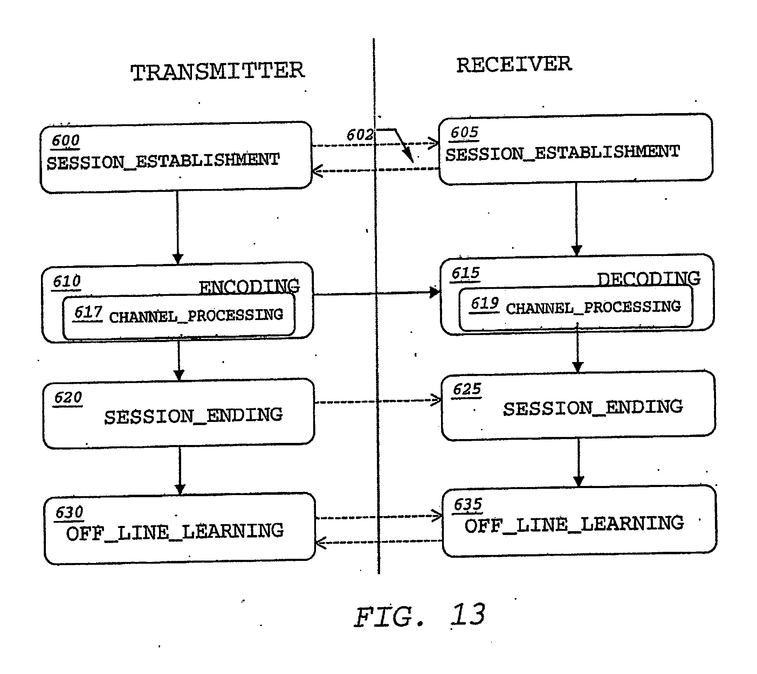

Fig. 13 is an activity diagram that illustrates phases in the hyper- context mechanism, in accordance with a preferred embodiment of the invention;

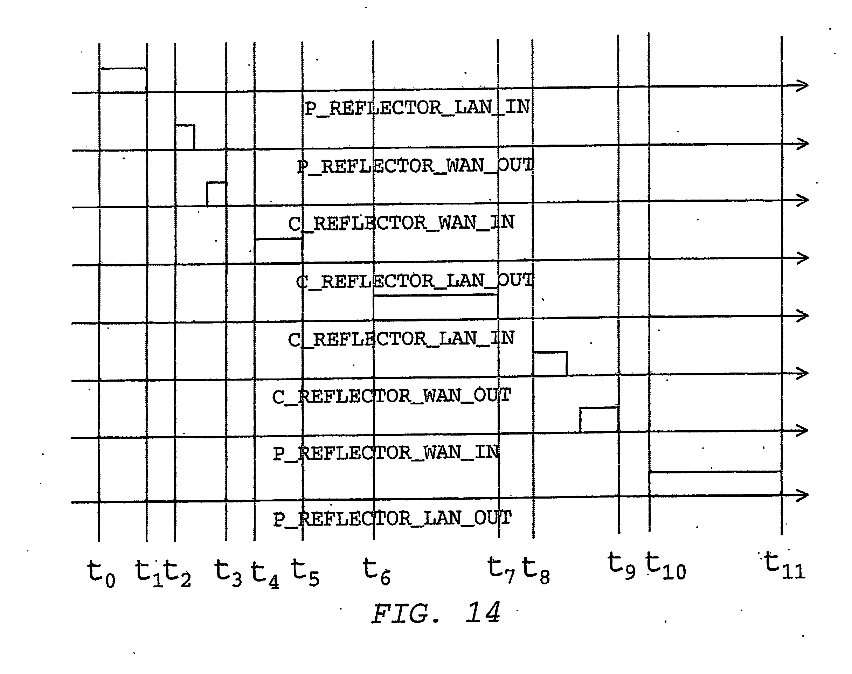

Fig. 14 is a timing diagram that illustrates an interactive transaction, in accordance with a preferred embodiment of the invention;

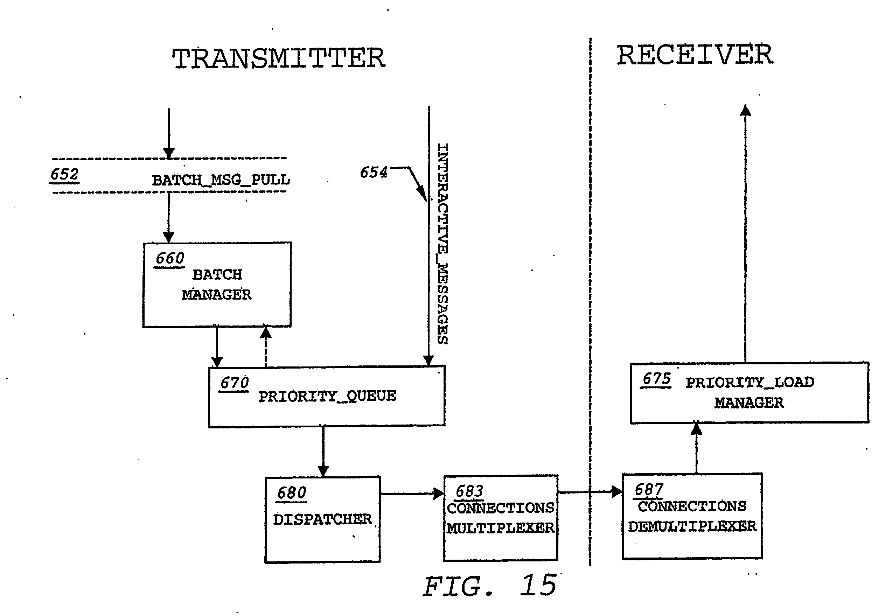

Fig. 15 is a functional block diagram that illustrates the service level management process, in accordance with a preferred embodiment of the invention.

### DETAILED DESCRIPTION OF THE PREFERRED EMBODIMENT DEFINITIONS

In the context of the present invention the following terms shall have the meaning associated therewith or the meaning established by the context of the text referring to such term: "Message"shall mean the entire content an application whishes to transmit at a given point in time or, a segment of content larger then a single network packet.

"network instance image" shall mean an image which is generated as additional internet protocol address of another host. It will typically comprise an network address, such as an IP address; an entry in a name service and a buffering sufficient for messages.

"Reflection of a service"shall comprise two physical hosts A in network X, B in network Y; two network instance images of hosts A'in network Y generated by an instance Il of the invention, B'in network X generated by an instance 12 of the invention. Actual communication is performed by (communication between A to B): A performs local communication with B'on network X; Il transmit the content to 12 (in an efficient manner described in the text) and A'on 12 performs communication with B or in communication between (B to A) -the same process in reverse. The reflection process can be implemented by providing lookup tables in each network that maps the the different network address to the same common identification. For example, the IP of the physical service producer and the network instance image are mapped to a specific identification such as the number"47". In the associated lookup table of Il the number"47"shall be associated with the IP address 192. 168. 10.17. Persons skilled in the art will appreciate that numerous other network common identification methods can be used.

"Service level management"shall mean the process by which traffic of data is managed in order to meet predefined levels of service.

"Local Area Network"shall mean a computer implemented communications network spread over a certain area and includes wide area networks and other communications networks such as data network, telephone networks, satellite networks, cellular networks and the like. A local area network can also mean a single device having two applications each application is communicating with the other.

The present invention provides an apparatus, system, and method to provide (to reflect) the services of remote hosts, which are referred to as"Service Producers", to local hosts, which are referred to as"Service Consumers", where the result of the operation is the virtual placement of both the Service Producers and the Service Consumers in the same physical Local Area Network (LAN) The proposed system of the present invention enables network managers to reflect specific network services to remote locations according to a pre-defined reflection policy, to define, to monitor, and to manage the service level of each reflected service, to secure remote LANs from direct network layer communication to increase the utilization of the communication lines in order to support a larger number of simultaneous Consumer-Producer sessions, or an improved service level to the same number of sessions comparing to the traditional Wide Area Network (WAN) connection, to reduce the communication processing load from Service Producers, and optionally to perform load balancing.

The present invention provides several novel aspects, which include the reflection of network service to remote locations, providing ease of management and potential isolation in order to enhance security between the remote networks, an adaptive mechanism for detection and elimination of information redundancy, which utilize the information encapsulated in the network topology to provide high utilization of the physical communication channel, and a method for the monitoring and the management of the service levels for each reflected service with optional load balancing between Service Producers.

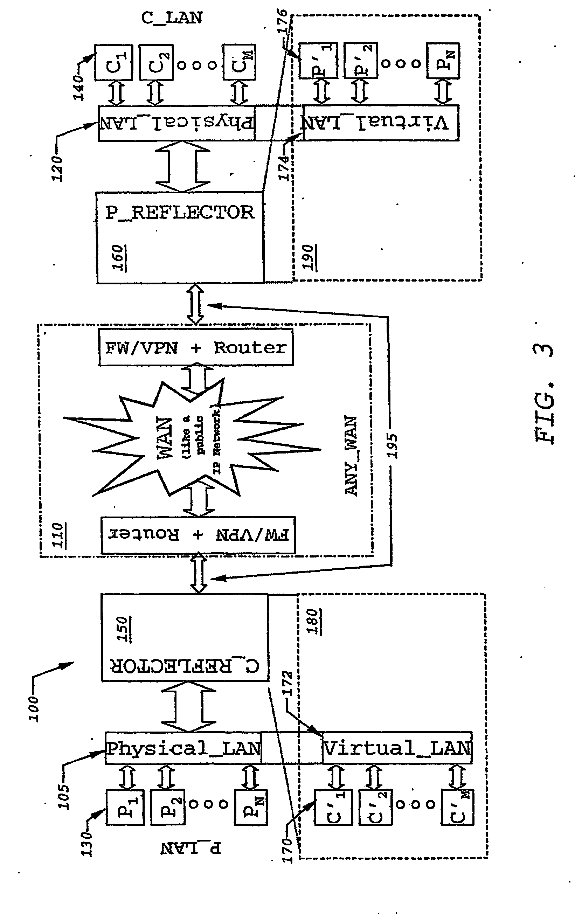

Referring now to Fig. 3 that illustrates the reflection of services mechanism. A Service Producer 130 is connected to a Local Area Network 105 at physical site Producer LAN. The server 130 provides a service to a Service Consumer 140, which is connected to a Local Area Network 120. According to prior art, the methods of providing the service typically include a) the establishment of direct communication between hosts 140 and 130 over the WAN 110. b) the provision of the service is provided by using a service-specific distributed infrastructure.

The limitations of direct communication are as follows. The direct communication at the network layer (OSI model layer 3) exposes resources in each network for unauthorized access from the other network. In order to restrict this access, the network manager must establish an access control policy using a firewall. In addition, the communication performance of the physical WAN is usually two scales less than the LAN capacity. The limitation of distributed infrastructure for each service concerns the cost and the complexity in acquiring, maintaining, and managing the infrastructure.

The present invention uses the following mechanism to establish advanced and enhanced service provisioning. A Producer Reflector device 160 is physically connected to physical LAN 120. According to a pre-defined policy, Producer Reflector 160 creates in Consumer LAN network instance images of Service Producers from Producer LAN. A service consumer 140 connects the local reflected network image 176 of a Service Producer 130 from the Producer LAN.

A Consumer Reflector device 150 is physically connected to the physical LAN 105. According to the same pre-defined policy, Consumer Reflector 150 creates in Producer LAN network instance images of service consumers from Consumer LAN. A reflected network image 170 connects the Service Producer 130 on behalf of the actual Service Consumer 140 from Consumer LAN. The Producer Reflector 160 and the Consumer Reflector 150 devices connect with each other over WAN 110 using a network channel 195, which is optimized as described in the following.

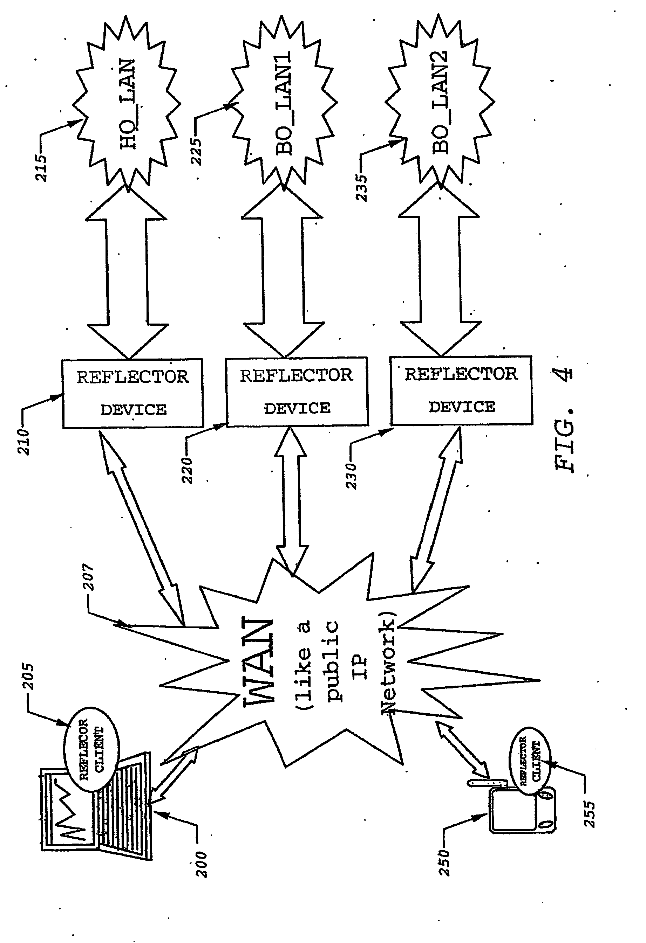

A distributed organization with more then two sites needs a deployment of several reflectors. Referring now to Fig. 4 that is a functional block diagram, which illustrates a typical deployment of reflectors in such an organization. A reflector device 210 is installed in the Headquarters LAN 215, such as a LAN associated with an organization headquarters. Additional reflection devices 220,230 are installed in the additional branch office LANs 225,235 respectively. Software client reflectors 205,255 are installed on laptops of remote/mobile users and wireless PDA devices 200,250. The software reflector clients 205,255 are linked to the WAN 207 and the one side and the reflector devices 210,220, 230 are connected to the WAN 207 on the other side.

The operation of the reflector is coordinated in accordance with a pre- defined reflection policy. Reference is made now to Fig. 5 that illustrates an exemplary reflection policy. The illustrated reflection policy is implemented via a control table, which maps an original Service Producer (identified by the host address 260 and the service identification 263) to a list of remote sites or a group of sites/users to which the Service Producer is reflected. In the drawing under discussion there are several entries where each entry represents a specific server.

In the present example, several servers of a local domain are designated with the posfifix"local". The table entries of the servers include various columns storing reflection control fields, such as an optional Service Level definition 267 and "Reflected to"Sites/Groups 270. Thus, according to the illustrated control fields, the HTTP service of the intranet server, designated as"Intranet local" in the Host address 260, is reflected to the Paris and London branch offices (designated as BOPARIS and BO LONDON), and to a group of mobile sales persons designated as RW SALES. The Service Level 267 of the intranet server is defined as"Interactive"with specific target, such as a 500mSec response time.

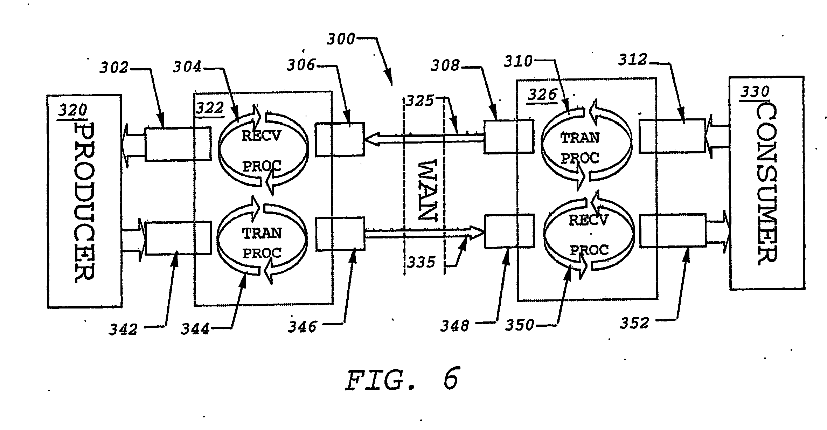

The network instance image of a remote host behaves like an actual local host. It includes a local network layer address, an entry in the local domain name system, and messages that are preferably transmitted and received at LAN speed. Optionally, the virtual host and or its current user are authenticated in some authentication system. Referring now to Fig. 6, which illustrates the processing of a continuous connection, such as Transmission Control Protocol (TCP), between a Consumer 330 and a Producer 320. The consumer 330 connects to the local virtual instance 326 of the Producer 320. Each massage is transmitted into a sufficiently large receive buffer 312 at LAN speed. A transmission process 310 associated with the local virtual instance 326 is scheduled according to service level management considerations. The process 310 reads the message from buffer 312, and uses the adaptive high-resolution detector and the eliminator of information redundancy mechanism to replace the message with a substantially shorter signal. The shorter signal is stored into a sufficiently large transmission buffer 308. Then the message is transmitted over the WAN 325 to the Producer side, where it is stored into the buffer 306. The reversed processing of the adaptive high-resolution detector and eliminator of information redundancy mechanism extracts the original message from the buffer 306 and stores it into buffer 302, from which it is sent in turn to the actual Producer 320. Messages, which are sent from the Producer, are routed over a similar path in the reverse direction. The reverse path includes the Producer-side receive buffer 342, the Producer-side transaction process 344, the Producer-side transmission buffer 346, the WAN 325, the Customer-side transmission buffer 348, the Customer-side transaction process 350 and the Consumer-side receiver buffer 352.

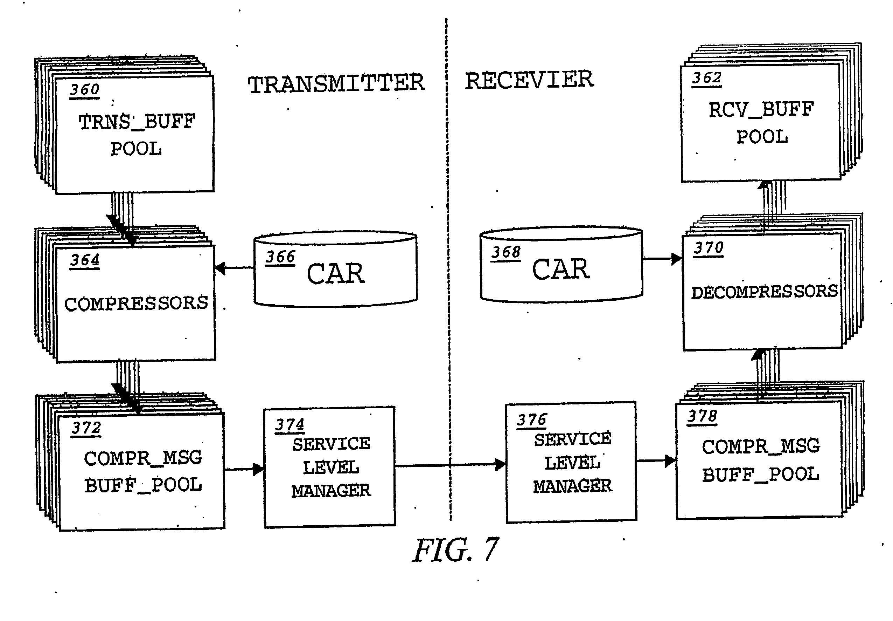

Referring now to Fig. 7 that describes the transmission and reception operations of Fig. 6 from the system's viewpoint. The messages from the LAN are received into the transmission pool of buffers 360 where a dedicated compressor 364 is used for each connection or a group of connections. The compressors 364 of each network session operate in coordination with a database designated as Common Acceleration Resources (CAR) 366. The CAR mechanism will be described in detail hereunder in association with the following drawings. The compressed messages are stored in a dedicated pool of buffers 372.

The service level manager 374 dispatches the messages are dispatched to the communication channel. The module 374 will be described in more detail in association with Fig. 15. On the receiver side, a similar reverse process takes place. In the receiver LAN the service level manager 376 receives the compressed messages from the communication channel and inserts the compressed messages into a dedicated pool of connection-specific reception buffers 378. The connection-specific decompressor device 370, in coordination with the CAR 368 retrieves the messages from the connection-specific buffers 378, un-compresses the messages and inserts the un-compressed messages into the pool of the buffers 362.

A universal compression system, such as LZ, used to detect redundancy in the transmitted information, and to replace strings with a usually shorter reference to redundant data. The term"context"is used for the scope of historical information, which is used in the compression process. Presently, common contexts could include a single packet, a single message, or the current TCP connection.

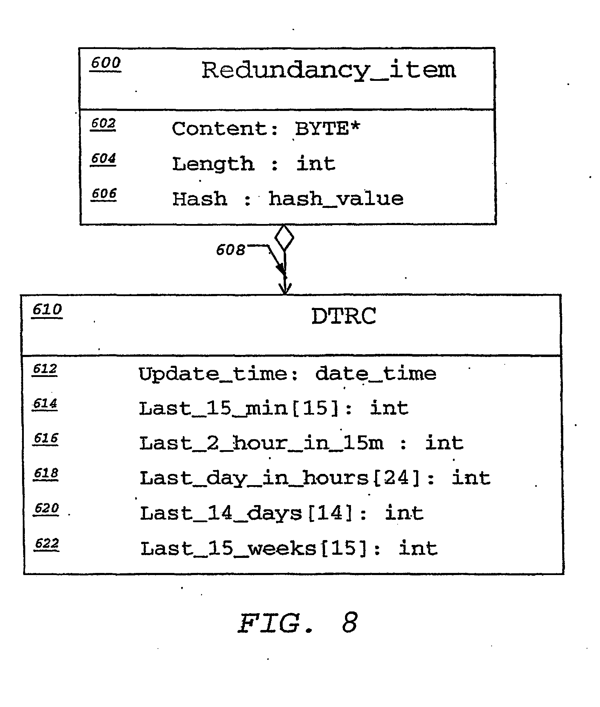

In existing systems, redundancy detection, or learning process, is internal to the current context. The obtained learning is lost when the context, terminates. In the present invention the learning results from each context are utilized in future communication. For this purpose a data structure named"hyper- context"is utilized. The"hyper-context"is used to manage"Redundancy item" data structures, which hold the information of a single repeating string. Referring now to Fig. 8 that illustrates a possible example for the"Redundancy item"data structure. The"Redundancy item"class has the following attributes: the content 602 of the redundant string, its length 604, a hash value 606, and an object of the class Decreasing Time Resolution Counters (DTRC) 610. The DTRC class is used to track appearance frequencies over time.

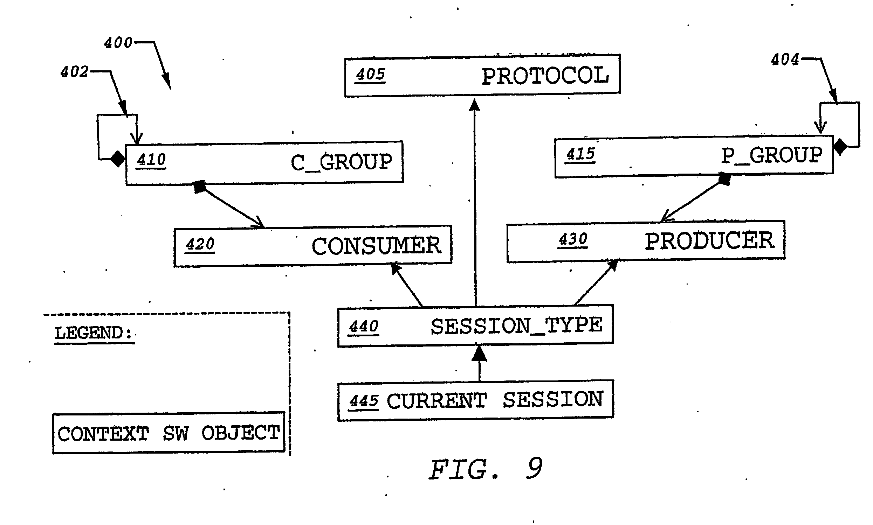

Referring now to Fig. 9 that illustrates the structure of the hyper- context data. Each rectangle on the drawing represents a software"context" object. A context object is a collection of"Redundancy items". The CURRENT SESSION 445 context object is related to an ongoing session. Note should be taken that a network session usually includes several compression contexts, one for each connection and for each datagram yet, the detected redundancy is still managed under the CURRENT SESSION object 445. A SESSION TYPE context object 440 holds items from historical sessions of the same type (with the same < Producer, Consumer, Protocol > identification). The CONSUMER context object 420 includes items, which are common to the content of the communication between the Consumer and several Producers. The PRODUCER context object 430 includes items, which are common to the Producer having several Consumers. Each CONSUMER context object 420 can belong to one or more CONSUMER GROUPs 410, which can be further classified to other groups, such as 402 and the like. Each PRODUCER context object 430 can belong to one or more PRODUCER GROUPS 415, which can be further classified to other groups, such as 404 and the like. The PROTOCOL context object 405 includes items, which are common to the protocol, which is alternatively often named service in general, even between other Producers and Consumers. The entire hyper context database is stored on a computer storage device, such as a magnetic or optical disk. Context objects, which are relevant to current sessions, are loaded into the main memory. In order to utilize the hyper-context during the real time communication, a coding scheme, which represents references to items in multiple context objects, is used.

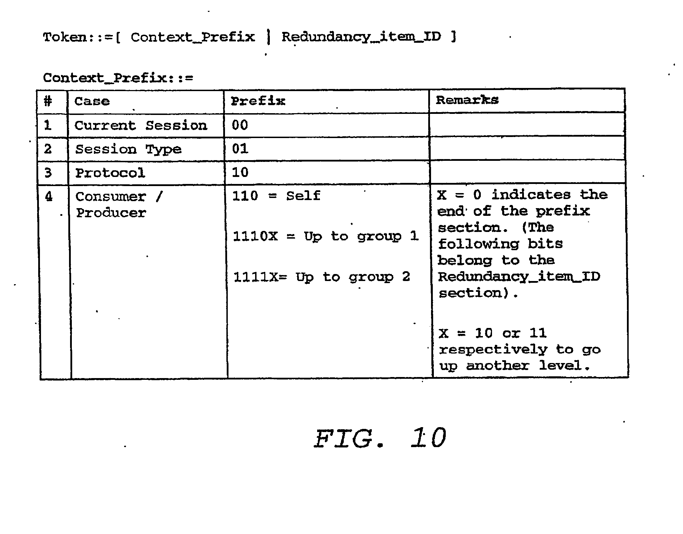

Reference is made now to Fig. 10 that is an exemplary token coding scheme, which can address items for every context object of Fig. 9. Each token is a chain of a variable length Context Prefix and a Redundancy item ID. The Content Prefix identifies the context object by determining whether it is a PROTOCOL, or CURRENT SESSION, or SESSION TYPE, or a group. The Redundancy item ID identifies the redundancy item within the context object.

The exemplary coding scheme enables each group to belong to zero, one, or 2 groups.

Referring now to Fig. 13 that describes the phases of the communication process. The process includes the following phases: a) Session establishment phase (600,605) where both sides load the relevant context objects into memory. A specific validation process is performed on the objects in order to ensure that the context objects are identical on each side. An example for such validation process can include the sending of a list of < context object identification, hash value > items by a transmitting side (602) and the acknowledgement concerning the validity of the list by the receiver side. b) Communication phase: A process that includes encoding at the TRAMSMITTER, decoding at the RECEIVER, and common processing on the original data stream. The processing is performed simultaneously on both sides b-1) Encoding (610): For a reasonable segment of the message, pattern matching activities with existing data, within the hyper-context data structure takes place. New Redundancy items are stored in a CURRENT SESSION context object, and signaled to the other side in a manner similar to basic LZ. The result of this process is a stream of tokens and segments from the original content (herein after referred to as encoded stream) b-2) Decoding (615): The received encoded content is extracted using the local hyper-context data structure instance b-3) Common processing (617,619) : The process includes: appearance counters updates and selective recording of the content of the channel in order to detect" cross redundancy "during the off line phase. c) Session ending (620,625) : A decision for" end-of-session" is taken place by both sides after a predefined"silent"period. In some cases the decision is signaled to the other side. The"end-of-session" decision frees the CURRENT SESSION object and the recorded content, for the off-line learning phase. d) Off line learning (630, 635) : This phase includes two activities: terminated session processing and periodic update. During the terminated session processing, Redundancy items from the stored CURRENT SESSION objects are transferred to the proper place in the"hyper-context"structure. A search in the selected-recorded segments is performed, and the proper" Redundancy items"are updated and created. During the periodic processing the counters of the DTRC are updated and generalization decisions, such as concerning the passing of redundancy items up the hyper-context hierarchy, are performed.

The proposed system includes three methods to implement the hyper- context process in real-time: a) direct single block processing, b) processing with a pre-compressor/post-decompressor ; and c) policy based dictionaries injection. A system, which implements the present invention, may utilize a subset of the above methods. a) In the Direct/Single Block processing method the hyper-context process is literally implemented. The CURRENT SESSION context object is searched using the same process that searches the entire hyper-context data structure. b) The Pre-compressor/Post-decompressor includes matching with "Redundancy items"within the hyper-context data structure, from the SESSION TYPE, and up the hierarchy of context objects is done via the utilization of a pre- compressor unit as described in Fig. 11. The drawing is a functional block diagram, which illustrates the communication between an information source 452 and an information destination 476 over a channel 457, using an adaptive high- resolution detection and elimination of information redundancy compressor 450 and decompressor 470 modules. In the compression process, a preprocessor sub module 454 match the content of the channel with elements from the real time context 460, and replaces matched elements with token according to a coding scheme similar to the described in association with Fig. 10, prior to processing the sting using a common universal compressor 456. On the other side of the channel, the data stream is first uncompressed using the proper universal decompressor 472, and then the post decompressor sub module 474 extracts the original content from the tokens, which were inserted by 454, using 478 that is an exact local copy of 460. During the real time session, the content from the channel is selectively recorded by a recorder sub-module 458 into a buffer 462. When the session terminate, the analyzer sub-module 466 processes the recordings, and updates the Common Acceleration Resources (CAR) database 468. An identical process is performed on the other side by the analyzer 488. When a new session is activated, relevant elements from the CAR 468 and 486 are loaded into the Real Time Context 460 and 478 respectively. The necessary logic is managed by the logic and control manager sub-module 464, which uses the control channel 465 to coordinate with the logic sub module 482 on the other side. c) In the policy based directory injection method the hyper-context data structure is used to generate a collection of data-blocks where each block contains a chained content of Redundancy Items, and a block injection policy.

Referring now to Fig. 12 which is a functional block diagram that illustrates a mechanism for communication between an information source and an information destination over a channel using policy based dictionary injection.

The drawing illustrates a mechanism 500 for communication between an information source 520 and an information destination 526, over a channel 510 using a hyper context compression module 505, and a decompression module 515. In the compression module 505 a compression manager module 522 includes a pre-defined blocks replacement policy 532. The policy 532 and a collection of data blocks 540 (having the same instances 545 on the other side of the channel 510) are used to improve the performance of a common universal compressor 535 by interleaving data blocks in the stream as it is seen by the compressor 535.

Next, the service level management method will be described. A service level for each reflected service is maintained in accordance with the following mechanism. The quality of service requirement for each service is part of the reflection strategy, as illustrated in column 267 of Fig. 5. There are two basic classes of service: a) batch and b) interactive. The batch service is a non- interactive transaction of large messages having a lower priority relative to the interactive messages. The service level receives a Percentage of the Current Free (PCF) bandwidth or at least, the minimal"keep alive"rate. In the interactive service the transactions should be completed within a reasonable time defined as the Target Transaction Time (TTT). In a request/reply scenario TTT is defined as the time from the submission of a request until the reply is fully transmitted to the requesting host.

Referring now to Fig. 14 that illustrates the timing of a request/reply transaction associated with the Interactive Transaction Timing method. The time includes the following periods.
Request receive time (tl-to)
Request processing time-transmitter side (t2-t1)
Reflector to reflector request transmission time (t3-t2)
Request processing time (t4-t3)
Request transmission to actual receiver processing time (t5-t4)
The Service Producer processing time (t6-t5) (not under the direct control of the system)
Replay receive time (t7-t6)
Replay processing time-transmitter side (t8-t7)
Reflector to reflector replay transmission time (tg-t8)
Replay processing time (tio-t9)
Replay transmission to actual receiver time (t11-tlo)
The time measurements t1-t11 are taken for each interactive transaction. The statistics for each transaction type are suitably recorded. A Target End Time (TET), which is the product of the addition of the current time to the TTT, is attached to each interactive transaction.

Reference is made now to Fig. 15 that illustrates the Transaction Scheduling method and the associated transmission scheduling mechanism. The messages, such as requests or replies, to be sent over the WAN are stored in a Priority Queue 670 that is managed by the TET value of each message. The lower this value is the higher is the priority. A batch manager module 660 takes segments from long batch transactions at a rate, which is determined by the PCF value and the presence of previous segments in the priority queue. The batch manager 660 attaches each sample a TET value in order to ensure the minimal "keep-alive"rate. The priority management according to the TET value is actually an Earliest Deadline First (EDF) management policy that capable of providing a 100% utilization of the managed resource.

The dispatcher 680 obtains messages from the priority queue, and dispatches the messages in turn to the WAN channel through the connections multiplexer module 683. The module 683 passes messages, which are substantially shorter than the packet size over the same open connection through the WAN. Thus, a saving in the packet headers overhead is achieved. The multiplexing is done by adding a connection identification, length > header to each message.

On the receiver side, the messages are demultiplexed using module 687, and then handled, in accordance with the TET value, by the priority/load manager module 675. The managed resources in this case are the Service Producers, which are not part of the system. Module 675 first dispatches to the same Service Producer messages with a lower TET. In addition, in accordance with recent measuring of the (t6-t5) value of Fig. 14 module 675 determines the processor load on the Service Producer, and uses this information for load balancing, if more then one instance of the Service Producer exists.

In conclusion, the present invention provides a method for provisioning network services by creating virtual reflections of the Service Producers in a manner, which is practically local from the Service Producers and Consumers viewpoints, as covered by the aspects of network topology, addressing and transaction response time. A substantially improved response time is achieved by the hyper-context compression and message oriented service level management aspects of the invention. The network management techniques according to the present invention have several advantages. A management scheme is used in which services become (virtually) local where they are needed with a defined level of service and without the need to handle packet level communication mechanisms. Another advantage regards the network layer isolation option, which provides a high level of security and simplified security policies in firewall. Simplified security policies are effective in reducing the number of errors. A further advantage of the present invention concerns a high utilization of the communication line. A yet further advantage is that service level is enforced according to the timing requirement of each transaction, achieving an effective and accurate mechanism.

Other embodiments of the present invention and its individual components will become readily apparent to those skilled in the art from the foregoing detailed description. The invention could be reduced to practice in several different embodiments, and numerous modifications could be made to the operating details described in the text of this document without significantly departing from the scope of the present invention. Accordingly, the drawings and the detailed description are to be regarded as illustrative in nature and not to be construed as limiting and restrictive. The invention is to be limited only by the appended claims.

## Claims

1. In a data communication network including at least one remote service producer (130; 320), and at least one local service consumer (140; 330), a method for providing network services from the at least one remote service producer (130; 320) to the at least one local service consumer (140; 330) over a network channel (195), the method comprising the steps of:
establishing (600, 605) a session between a service producer (130; 320) and a service consumer (140; 330), wherein one of the service producer (130; 320) and the service consumer (140; 330) is acting as a transmitter and the other as a receiver,
where the establishment of the session comprising the steps of:
loading the relevant context objects (405, 410, 415, 420, 430, 440, 445) by both sides (130; 320 and 140; 330);
validating the loaded context objects (405, 410, 415, 420, 430, 440, 445) by both sides (130; 320 and 140; 330); and
acknowledging that the loaded context objects (405, 410, 415, 420, 430, 440, 445) are identical;
encoding (610) messages sent by the transmitter, the encoding process comprising the steps of:
performing pattern matching between the message and a hyper-context data structure (400), wherein the hyper-context data structure (400) is a collection of composite session context objects and grouped recursive objects, the context objects comprising a collection of redundancy items;
storing new redundancy items in a current session context object (445);
signaling the receiver; and
transmitting an encoded content to the receiver;
decoding (615) the messages received by the receiver, the decoding process comprising the steps of:
extracting the received encoded content using the hyper-context data structure (400);
processing (617, 619) the messages, the processing comprising the steps of:
updating appearance counters; and
recording selectively the content of the network channel (195),
the method further comprises service level management of interactive transactions, comprising target end time attachment to each message, and a priority queue for earliest deadline first scheduling.

2. The method as claimed in claim 1 wherein the management of the service level is performed in a batch mode.

3. The method as claimed in claim 2 wherein the management of the service level is performed in an interactive mode.

4. The method as claimed in claim 3 wherein the service level management in the interactive mode comprises the steps of:
storing the messages in a priority queue (670) managed by a timing value on the transmitter;
collecting segments from the transmitted content at a rate determined by a timing value and by the presence of the previous segments in the priority queue (670) on the transmitter;
attaching each sample a timing value in order to ensure minimal keep-alive rate on the transmitter;
dispatching the messages to the connections multiplexer (683);
multiplexing the messages;
de-multiplexing the messages on the receiver;
processing the messages in accordance with the timing value.

5. The method as claimed in claim 4 further comprises the steps of:
measuring the processing time of the messages;
determining the processor load on the service producer (130; 320) by the load manager;
performing load balancing in accordance with the processor load.

6. A system for providing network services from the at least one remote service producer (130; 320) to the at least one local service consumer (140; 330) over a network channel (195), the system being operable to:
establish (600, 605) a session between a service producer (130; 320) and a service consumer (140; 330), wherein one of the service producer (130; 320) and the service consumer (140; 330) is acting as a transmitter and the other as a receiver, where the establishment of the session comprises:
load the relevant context objects (405, 410, 415, 420, 430, 440, 445) by both sides (130; 320 and 140; 330);
validate the loaded context objects (405, 410, 415, 420, 430, 440, 445) by both sides (130; 320 and 140; 330); and
acknowledge that the loaded context objects (405, 410, 415, 420, 430, 440, 445) are identical;
encode (610) messages sent by the transmitter comprising:
perform pattern matching between the message and a hyper-context data structure (400), wherein the hyper-context data structure (400) is a collection of composite session context objects and grouped recursive objects, the context objects comprising a collection of redundancy items;
store new redundancy items in a current session context object (445);
signaling the receiver; and
transmit an encoded content to the receiver;
decode (615) the messages received by the receiver comprising:
extract the received encoded content using the hyper-context data structure (400);
process (617, 619) the messages comprising:
update appearance counters; and
record selectively the content of the network channel (195),
the system further comprises service level management of interactive transactions, comprising target end time attachment to each message, and a priority queue for earliest deadline first scheduling.

7. The system as claimed in claim 6, the system further comprising a reflection rules control table comprises the elements of:
a service producer host addresses (260);
a service producer communication protocol type (263);
a definition of the sites to which the service is reflected.

8. The system as claimed in claim 6 wherein the service level management mechanism comprises the elements of:
a priority queue (670) for message scheduling;
a batch manager (660);
a message dispatcher (680);
a connections multiplexer (683);
a connections demultiplexer (687),;
a priority load manager (675);
a timing indicator associated with a specific message.

9. The system as claimed in claim 6 further comprising an information redundancy detector and information redundancy eliminator, wherein the information redundancy detector and information redundancy eliminator comprises the hyper-context data structure (400).

10. The system as claimed in claim 9 wherein the hyper-context data structure comprises (400) the elements of:
a current session context object (445);
a session type context object (440);
a consumer context object (420);
a producer context object (430);
a consumer group context object (410);
a producer group context object (415);
a protocol context object (405).

11. The system as claimed in claim 6 further comprising a compression mechanism, wherein the compression mechanism comprises the elements of:
at least one compressor device (535);
at last one decompressor device (536);
a common acceleration resources database.

## Patentansprüche

1. In einem Datenkommunikationsnetzwerk enthaltend zumindest einen entfernten Service- bzw. Diensterzeuger (130; 320) und zumindest einen lokalen Service- bzw. Dienstverwender (140; 330), ein Verfahren zum Bereitstellen von Netzwerkdiensten von dem zumindest einen entfernten Diensterzeuger (130; 320) an den zumindest einen lokalen Dienstverbraucher (140; 330) über einen Netzwerkkanal (195), wobei das Verfahren die Schritte umfasst:
Herstellen bzw. Aufbauen (600, 605) einer Sitzung zwischen einem Service- bzw. Diensterzeuger (130; 320) und einem Service- bzw. Dienstverwender (140, 330), wobei einer des Diensterzeugers (130; 320) und des Dienstverwenders (140, 330) als ein Sender, und der andere als ein Empfänger agiert, wobei die Herstellung bzw. der Aufbau der Sitzung die Schritte umfasst:
Laden der relevanten Kontextobjekte (405, 410, 415, 420, 430, 440, 445) durch beide Seiten (130; 320 und 140; 330);
Validieren der geladenen Kontextobjekte (405, 410, 415, 420, 430, 440, 445) durch beide Seiten (130; 320 und 140; 330); und
Bestätigen, dass die geladenen Kontextobjekte (405, 410, 415, 420, 430, 440, 445) identisch sind;
Verschlüsseln (610) von Nachrichten, die von dem Sender gesendet werden, wobei der Verschlüsselungsprozess die Schritte umfasst:
Durchführen eines Mustervergleichs bzw. Pattern Matching zwischen der Nachricht und einer Hyperkontextdatenstruktur (400), wobei die Hyperkontextdatenstruktur (400) eine Sammlung von Zusammengesetzte-Sitzung-Kontextobjekten und gruppierten rekursiven Objekten ist, wobei die Kontextobjekte eine Sammlung von Redundanzgegenständen bzw. -elementen umfassen;
Speichern von neuen Redundanzelementen in einem Aktuelle-Sitzung-Kontextobjekt (445);
Signalisieren dem Empfänger bzw. des Empfängers; und
Senden eines verschlüsselten Inhalts an den Empfänger;
Entschlüsseln (615) der von dem Empfänger empfangenen Nachrichten, wobei der Entschlüsselungsprozess die Schritte umfasst:
Extrahieren des empfangenen verschlüsselten Inhalts unter Verwendung der Hyperkontextdatenstruktur (400);
Verarbeiten (617, 619) der Nachrichten, wobei das Verarbeiten die Schritte umfasst:
Aktualisieren von Erscheinungs- bzw. Auftretenszählern; und
selektives Aufzeichnen des Inhalts des Netzwerkkanals (195),
wobei das Verfahren ferner Dienstniveaumanagement bzw. Service Level Management bzw. Verwaltung von interaktiven Transaktionen umfasst, umfassend Zielendzeitanfügung an jede Nachricht, und eine Prioritätswarteschlange bzw. Priority Queue für Earliest Deadline First Scheduling.

2. Verfahren nach Anspruch 1, wobei das Management des Service Levels in einem Batch- bzw. Stapelbetrieb bzw. Stapelverarbeitungsmodus durchgeführt wird.

3. Verfahren nach Anspruch 2, wobei das Management des Service Levels in einem interaktiven Modus durchgeführt wird.

4. Verfahren nach Anspruch 3, wobei das Service Level Management in dem interaktiven Modus die Schritte umfasst:
Speichern der Nachrichten in einer Prioritätswarteschlange bzw. Priority Queue (670), die durch einen Timing-Wert an dem Sender gemanaged bzw. verwaltet wird;
Sammeln von Segmenten aus dem gesendeten Inhalt mit einer Rate, die durch einen Timing-Wert und durch die Anwesenheit der vorhergehenden Segmente in der Prioritätswartschlange (670) an dem Sender bestimmt wird;
Anfügen, an jedes Sample bzw. Probe, eines Timing-Werts, um eine minimale Aufrechterhaltungsrate bzw. Keep-Alive Rate an dem Sender sicherzustellen;
Versenden der Nachrichten an den Verbindungsmultiplexer (683);
Multiplexen der Nachrichten;
Demultiplexen der Nachrichten an dem Empfänger;
Verarbeiten der Nachrichten gemäß dem Timing-Wert.

5. Verfahren nach Anspruch 4, ferner umfassend die Schritte:
Messen der Verarbeitungszeit der Nachrichten;
Bestimmen der Prozessorauslastung bzw. -last an dem Diensterzeuger (130, 320) durch den Auslastungs- bzw. Lastmanager;
Durchführen eines Auslastungs- bzw. Lastausgleichs gemäß der Prozessorauslastung.

6. System zum Bereitstellen von Netzwerkdiensten bzw. -Services von dem zumindest einen entfernten Diensterzeuger (130; 320) an den zumindest einen lokalen Dienstverbraucher (140; 330) über einen Netzwerkkanal (195), wobei das System betriebsfähig ist zum:
Herstellen bzw. Aufbauen (600, 605) einer Sitzung zwischen einem Service- bzw. Diensterzeuger (130; 320) und einem Service- bzw. Dienstverwender (140, 330), wobei einer des Diensterzeugers (130; 320) und des Dienstverwenders (140, 330) als ein Sender, und der andere als ein Empfänger agiert, wobei die Herstellung bzw. der Aufbau der Sitzung umfasst:
Laden der relevanten Kontextobjekte (405, 410, 415, 420, 430, 440, 445) durch beide Seiten (130; 320 und 140; 330);
Validieren der geladenen Kontextobjekte (405, 410, 415, 420, 430, 440, 445) durch beide Seiten, (130; 320 und 140; 330); und
Bestätigen, dass die geladenen Kontextobjekte (405, 410, 415, 420, 430, 440, 445) identisch sind;
Verschlüsseln (610) von Nachrichten, die von dem Sender gesendet werden, umfassend:
Durchführen eines Mustervergleichs bzw. Pattern Matching zwischen der Nachricht und einer Hyperkontextdatenstruktur (400), wobei die Hyperkontextdatenstruktur (400) eine Sammlung von Zusammengesetzte-Sitzung-Kontextobjekten und gruppierten rekursiven Objekten ist, wobei die Kontextobjekte eine Sammlung von Redundanzgegenständen bzw. -elementen umfassen;
Speichern von neuen Redundanzelementen in einem Aktuelle-Sitzung-Kontextobjekt (445);
Signalisieren dem Empfänger bzw. des Empfängers; und
Senden eines verschlüsselten Inhalts an den Empfänger;
Entschlüsseln (615) der von dem Empfänger empfangenen Nachrichten,umfassend:
Extrahieren des empfangenen verschlüsselten Inhalts unter Verwendung der Hyperkontextdatenstruktur (400);
Verarbeiten (617, 619) der Nachrichten, umfassend:
Aktualisieren von Erscheinungs- bzw. Auftretenszählern; und
selektives Aufzeichnen des Inhalts des Netzwerkkanals (195),
wobei das System ferner Dienstniveaumanagement bzw. Service Level Management bzw. Verwaltung von interaktiven Transaktionen umfasst, umfassend Zielendzeitanfügung an jede Nachricht, und eine Prioritätswarteschlange bzw. Priority Queue für Earliest Deadline First Scheduling.

7. System nach Anspruch 6, wobei das System ferner eine Reflexionsregelnsteuertabelle umfasst, umfassend die Elemente:
eine Service- bzw. Diensterzeuger-Hostadressen (260);
einen Service- bzw. Diensterzeuger-Kommunikationsprotokolltyp (263);
eine Definition der Seiten bzw. Stellen, zu denen der Service bzw. Dienst reflektiert wird.

8. System nach Anspruch 6, wobei der Service Level Management-Mechanismus die Elemente umfasst:
eine Prioritätswarteschlange bzw. Priority Queue (670) zum Nachrichten-Scheduling;
einen Batch- bzw. Stapelmanager (660);
einen Nachrichtenversender (680);
einen Verbindungsmultiplexer (683);
einen Verbindungsdemultiplexer (687);
einen Prioritätsauslastungs- bzw. -lastmanager (675);
einen Timing-Indikator, der mit einer spezifischen Nachricht assoziiert ist.

9. System nach Anspruch 6, ferner umfassend einen Informationsredundanzdetektor und einen Informationsredundanzeliminator, wobei der Informationsredundanzdetektor und der Informationsredundanzeliminator die Hyperkontextdatenstruktur (400) umfasst bzw. umfasst.

10. System nach Anspruch 9, wobei die Hyperkontextdatenstruktur (400) die Elemente umfasst:
ein Aktuelle-Sitzung-Kontextobjekt (445);
ein Sitzungstypkontextobjekt (440);
eine Verwenderkontextobjekt (420);
ein Erzeugerkontextobjekt (430);
ein Verwendergruppenkontextobjekt (410);
ein Erzeugergruppenkontextobjekt (415);
ein Protokollkontextobjekt (405).

11. System nach Anspruch 6, ferner umfassend einen Komprimierungsmechanismus, wobei der Komprimierungsmechanismus die Elemente umfasst:
zumindest eine Komprimierervorrichtung (535);
zumindest eine Dekomprimierervorrichtung (536);
eine gemeinsame Beschleunigungsressourcendatenbank.

## Revendications

1. Dans un réseau de communication de données incluant au moins un producteur de services à distance (130 ; 320) et au moins un consommateur de services local (140 ; 330), procédé de fourniture de services en réseau de l'au moins un producteur de services à distance (130 ; 320) à l'au moins un consommateur de services local (140 ; 330) sur un canal de réseau (195), le procédé comprenant les étapes consistant à :
établir (600, 605) une session entre un producteur de services (130 ; 320) et un consommateur de services (140 ; 330), dans lequel un du producteur de services (130 ; 320) et du consommateur de services (140 ; 330) agit en tant qu'émetteur et l'autre en tant que récepteur, où l'établissement de la session comprend les étapes consistant à :
charger les objets de contexte pertinents (405, 410, 415, 420, 430, 440, 445) par les deux côtés (130 ; 320 et 140 ; 330) ;
valider les objets de contexte chargés (405, 410, 415, 420, 430, 440, 445) par les deux côtés (130 ; 320 et 140 ; 330) ; et
reconnaître que les objets de contexte chargés (405, 410, 415, 420, 430, 440, 445) sont identiques;
encoder (610) des messages envoyés par l'émetteur, le processus d'encodage comprenant les étapes consistant à :
réaliser un appariement de formes entre le message et une structure de données d'hypercontexte (400), dans lequel la structure de données d'hypercontexte (400) est une collection d'objets de contexte de session composites et d'objets récursifs regroupés, les objets de contexte comprenant une collection d'articles de redondance ;
stocker de nouveaux articles de redondance dans un objet de contexte de session actuel (445) ;
signaliser le récepteur ; et
transmettre un contenu encodé au récepteur ;
décoder (615) les messages reçus par le récepteur, le processus de décodage comprenant les étapes consistant à :
extraire le contenu encodé reçu en utilisant la structure de données d'hypercontexte (400) ;
traiter (617, 619) les messages, le traitement comprenant les étapes consistant à :
mettre à jour des compteurs d'apparence ; et
enregistrer sélectivement le contenu du canal de réseau (195),
le procédé comprend en outre une gestion de niveau de service de transactions interactives, comprenant le fait de joindre une heure de fin cible à chaque message et une file d'attente de priorité pour la première planification d'échéance au plus tôt.

2. Procédé selon la revendication 1, dans lequel la gestion du niveau de service est réalisée dans un mode par lots.

3. Procédé selon la revendication 2, dans lequel la gestion du niveau de service est réalisée dans un mode interactif.

4. Procédé selon la revendication 3, dans lequel la gestion de niveau de service dans le mode interactif comprend les étapes consistant à :
stocker les messages dans une file d'attente de priorité (670) gérée par une valeur de synchronisation sur l'émetteur ;
recueillir des segments du contenu transmis à une vitesse déterminée par une valeur de synchronisation et par la présence des segments précédents dans la file d'attente de priorité (670) sur l'émetteur ;
joindre à chaque échantillon une valeur de synchronisation pour garantir une vitesse d'entretien minimale sur l'émetteur ;
expédier les messages au multiplexeur de connexions (683) ;
multiplexer les messages ;
démultiplexer les messages sur le récepteur ;
traiter les messages en fonction de la valeur de synchronisation.

5. Procédé selon la revendication 4, comprenant en outre les étapes consistant à :
mesurer le temps de traitement des messages ;
déterminer la charge de processeur sur le producteur de services (130 ; 320) par le gestionnaire de charge ;
réaliser un équilibrage de charge en fonction de la charge de processeur.

6. Système de fourniture de services en réseau de l'au moins un producteur de services à distance (130 ; 320) à l'au moins un consommateur de services local (140 ; 330) sur un canal de réseau (195), le système pouvant opérer pour :
établir (600, 605) une session entre un producteur de services (130 ; 320) et un consommateur de services (140 ; 330), dans lequel un du producteur de services (130 ; 320) et du consommateur de services (140 ; 330) agit en tant qu'émetteur et l'autre en tant que récepteur, où l'établissement de la session comprend :
charger les objets de contexte pertinents (405, 410, 415, 420, 430, 440, 445) par les deux côtés (130 ; 320 et 140 ; 330) ;
valider les objets de contexte chargés (405, 410, 415, 420, 430, 440, 445) par les deux côtés (130 ; 320 et 140 ; 330) ; et
reconnaître que les objets de contexte chargés (405, 410, 415, 420, 430, 440, 445) sont identiques ;
encoder (610) des messages envoyés par l'émetteur comprenant :
réaliser un appariement de formes entre le message et une structure de données d'hypercontexte (400), dans lequel la structure de données d'hypercontexte (400) est une collection d'objets de contexte de session composites et d'objets récursifs regroupés, les objets de contexte comprenant une collection d'articles de redondance ;
stocker de nouveaux articles de redondance dans un objet de contexte de session actuel (445) ;
signaliser le récepteur ; et
transmettre un contenu encodé au récepteur ;
décoder (615) les messages reçus par le récepteur comprenant :
extraire le contenu encodé reçu en utilisant la structure de données d'hypercontexte (400) ;
traiter (617, 619) les messages comprenant :
mettre à jour des compteurs d'apparence ; et
enregistrer sélectivement le contenu du canal de réseau (195),
le système comprend en outre une gestion de niveau de service de transactions interactives, comprenant le fait de joindre une heure de fin cible à chaque message et une file d'attente de priorité pour la première planification d'échéance au plus tôt.

7. Système selon la revendication 6, le système comprenant en outre un tableau de commande de règles de réflexion comprenant les éléments de :
des adresses d'hôte de producteur de services (260) ;
un type de protocole de communication de producteur de services (263) ;
une définition des sites vers lesquels le service est reflété.

8. Système selon la revendication 6, dans lequel le mécanisme de gestion de niveau de service comprend les éléments de :
une file d'attente de priorité (670) pour la planification de messages ;
un gestionnaire de lots (660) ;
un expéditeur de messages (680) ;
un multiplexeur de connexions (683) ;
un démultiplexeur de connexions (687) ;
un gestionnaire de charge de priorité (675) ;
un indicateur de synchronisation associé à un message spécifique.

9. Système selon la revendication 6, comprenant en outre un détecteur de redondance d'informations et un éliminateur de redondance d'informations, dans lequel le détecteur de redondance d'informations et l'éliminateur de redondance d'informations comprennent la structure de données d'hypercontexte (400).

10. Système selon la revendication 9, dans lequel la structure de données d'hypercontexte (400) comprend les éléments de :
un objet de contexte de session actuel (445) ;
un objet de contexte de type de session (440) ;
un objet de contexte de consommateur (420) ;
un objet de contexte de producteur (430) ;
un objet de contexte de groupe de consommateurs (410) ;
un objet de contexte de groupe de producteurs (415) ;
un objet de contexte de protocole (405).

11. Système selon la revendication 6, comprenant en outre un mécanisme de compression, dans lequel le mécanisme de compression comprend les éléments de :
au moins un dispositif compresseur (535) ;
au moins un dispositif décompresseur (536) ;
une base de données de ressources d'accélération communes.
